(19) Europäisches Patentamt
European Patent Office
Office européen des brevets

(11) Veröffentlichungsnummer: **0 346 809**
**A2**

(12) **EUROPÄISCHE PATENTANMELDUNG**

(21) Anmeldenummer: **89110620.5**

(51) Int. Cl.[4]: **C08G 59/18 , C08L 63/00**

(22) Anmeldetag: **12.06.89**

(30) Priorität: **14.06.88 BR 8802908**

(43) Veröffentlichungstag der Anmeldung:
**20.12.89 Patentblatt 89/51**

(84) Benannte Vertragsstaaten:
**CH DE ES FR GB IT LI NL SE**

(71) Anmelder: **CIBA-GEIGY AG**
**Klybeckstrasse 141**
**CH-4002 Basel(CH)**

(72) Erfinder: **Mayer Gomes, Maria Cristina**
**Carolina Braga**
**Rua Joao Amaro, 463**
**04583 Sao Paulo(BR)**

(74) Vertreter: **Zumstein, Fritz, Dr. et al**
**Zumstein & Klingseisen Patentanwälte**
**Bräuhausstrasse 4**
**D-8000 München 2(DE)**

(54) **Knetmasse.**

(57) Lagerstabile Knetmasse, worin die Harz- und die Härterkomponente eine genügend hohe Viskosität besitzen, damit sie geometrisch so angeordnet werden können, dass sie eine gemeinsame Berührungsfläche besitzen. Diese hat den Vorteil, dass Harz und Härter stets im optimalen Verhältnis vorhanden sind und kann als Kleber, als Füllmasse, als Modelliermasse oder als Dichtmasse verwendet werden.

**EP 0 346 809 A2**

## Knetmasse

Die vorliegende Erfindung betrifft eine coextrudierte Knetmasse auf Epoxidharz-Basis, worin Harz- und Härterkomponente bereits vorhanden sind, deren Verwendung als Kleber, als Füllmasse, als Modelliermasse und als Dichtmasse, sowie ein Verfahren zur Herstellung dieser Knetmasse.

Knetmassen z.B. auch auf Epoxidharzbasis sind bekannt. Jedoch werden die Harz- und Härterkomponenten stets getrennt aufbewahrt bis zur Verwendung. Die Zubereitung einer einsatzfähigen Knetmasse erfordert stets ein portionengerechtes Mischen von Harz und Härter, was jedoch ohne die Hilfe von einer Waage oder einem Volumenmass praktisch nur für Mischverhältnisse von Harz zu Härter von 1 zu 1 möglich ist. Harz-/Härter-Systeme, die bereits beide Komponenten in einer Masse enthalten sind bekannt aus dem Gebiet der Hot-melt Klebstoffe z.B. auf Epoxidharzbasis oder thermoplastische Massen. Jedoch handelt es sich bei solchen Systemen um wärmehärtbare Massen, wo das Problem der vorzeitigen Härtung während der Lagerung bei Raumtemperatur und die damit verbundene Einschränkung in der Verarbeitbarkeit nicht auftritt, da keine Reaktion erfolgt.

Es wurde nun gefunden, dass bei geeigneter Wahl der Harz- und Härterkomponente die Möglichkeit besteht, Harz·und Härter in coextrudierter Form zu erhalten, dass trotz einer gemeinsamen Berührungsfläche der beiden Komponenten, die Masse lagerstabil bleibt und nicht aushärtet.

Die vorliegende Erfindung betrifft eine lagerstabile Knetmasse auf Epoxidharzbasis, dadurch gekennzeichnet, dass die Harz- und die Härterkomponente eine genügend hohe Viskosität besitzen, damit sie geometrisch so angeordnet werden können, dass sie eine gemeinsame Berührungsfläche besitzen.

Die genügend hohe Viskosität bewirkt, dass an der gemeinsamen Berührungsfläche von Harz und Härter, wo eine Härtungsreaktion einsetzt, diese auf eine sehr schmale .Zone beschränkt bleibt, d.h. es bildet sich eine gehärtete Haut. Diese Haut wirkt als "Trennfolie", welche eine weitergehende Härtung stoppt und so die Lagerstabilität gewährleistet. Andrerseits ist die Höhe der Viskosität auch für die Verarbeitbarkeit ausschlaggebend, erstens bei Coextrudierung der Masse, da die beiden Komponenten genügend formstabil sein müssen, damit sich Harz und Härter nicht mischen, zweitens muss die Masse noch von Hand durch Kneten gemischt werden können, damit sie einsatzfähig wird.

Der Einstellung der Viskosität der Komponenten kommt grosse Bedeutung zu, da die ausgehärtete Haut an der Berührungsfläche in ihrer Dicke und Festigkeit weitgehend von der Diffusion der Harz- und Härterkomponente ineinander abhängt, die ihrerseits von der Viskosität abhängig ist. Die Trennhaut darf sich beim Mischen von Harz und Härter durch Kneten nicht störend auswirken. Ist·die Haut wegen zu niedriger Viskosität zu dick, so wirken beim Mischen die Hautfragmente als Fremdkörper in der Masse. Weiter kann bei zu niedriger Viskosität die Masse auch nicht mehr richtig geknetet werden, da die Klebrigkeit zu hoch ist und die Masse an den Händen oder den Schutzhandschuhen haften bleibt. Ist andrerseits die Viskosität zu hoch, können Harz und Härter nicht mehr in genügenden Kontakt gebracht werden, das Produkt wird unbrauchbar.

Als Epoxidharze zum Einsatz in den erfindungsgemässen Knetmassen eignen sich alle Typen von Epoxidharzen, wie beispielsweise solche, die direkt an Sauerstoff-, Stickstoff- oder Schwefelatome gebundene Gruppen der Formel I

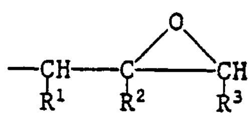

(I)

worin $R^1$ und $R^3$ je ein Wasserstoffatom darstellen, und $R^2$ ein Wasserstoffatom oder eine Methylgruppe bedeutet, enthalten und flüssig sind.

Als Beispiele solcher Harze seien Polyglycidyl- und Poly($\beta$-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder $\beta$-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-($\beta$-methylglycidyl)äther, die durch Umsetzung einer

mindestens zwei freie alkoholische und/oder phenolische Hydroxylgruppen pro Molekül enthaltenden Verbindungen mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly-(epichlorhydrin) aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit und aus Alkoholen mit aromatischen Kernen wie N,N-Bis-(2-hydroxyäthyl)-anilin und p,p′-Bis-(2-hydroxyäthylamino)-diphenylmethan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkylgruppen mit jeweils bis zu neun Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffen enthaltenden Aminen wie Anilin, n-Butylamin, Bis-(4-aminophenyl)-methan und Bis-(4-methylaminophenyl)-methan erhalten werden, Triglycidylisocyanurat sowie N,N′-Diglycidylderivate von cyclischen Alkylenharnstoffen wie Aethylenharnstoff und 1,3-Propylenharnstoff, und Hydantoinen, wie 5,5-Dimethylhydantoin.

Poly-(S-glycidyl)-verbindungen sind z.B. die Di-S-glycidylderivate von Dithiolen wie Aethan-1,2-dithiol und Bis-(4-mercaptomethylphenyl)-äther.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidyläther/Glycidylester der Salicylsäure oder p-Hydroxybenzoesäure, N-Glycidyl-N′-(2-glycidyloxypropyl)5,5-dimethylhydantoin und 2-Glycidyloxy-1,3-bis-(5,5-dimethyl-1-glycidylhydantoinyl-3)propan.

Gewünschtenfalls kann man Epoxidharzgemische verwenden. Bevorzugte Epoxiharze sind solche, wo die Gruppe der Formel I direkt an einem Sauerstoffatom sitzt (O-Typen), insbesondere solche auf Bisphenol-A- oder Bisphenol-F-Basis

Als Härter für die Epoxidharze der erfindungsgemässen Knetmassen eignen sich Aminhärter. Bevorzugt werden primäre Diamine und insbesondere bevorzugt sind aminofunktionelle Addukte.

Die reinen primären Diamine führen wegen ihrer niedrigen Viskosität und der damit verbundenen höheren Diffusion zu Problemen im Zusammenhang mit der Ausbildung der gehärteten Trennhaut (zu grosse Dicke) an der Berührungsfläche von Harz und Härter. Deshalb werden sie ausschliesslich im gefüllten Zustand (Erhöhung der Viskosität mit einem Füllstoff) eingesetzt.
Da die kommerziell erhältlichen primären Diamine immer noch mit flüchtigen zumeist Mono-Aminkomponenten verunreinigt sind, können auch Irritationen der Haut durch diese Verunreinigungen auftreten.

Daher sind aminfunktionelle Addukte von primären Diaminen mit Diepoxiden besonders bevorzugt. Durch die Umsetzung der Diamine mit den Epoxiverbindungen werden die Monoaminverunreinigungen erschöpfend abreagiert. Zusätzlich wird die Härterreaktivität bei Raumtemperatur durch die bei der Adduktbildung entstehenden OH-Gruppen noch erhöht. Die Addukte sind von flüssiger bis niedrigviskoser, pastöser Beschaffenheit.

Beispiele für solche Addukte sind die Umsetzungsprodukte von unverzweigten oder verzweigten Polymethylendiaminen wie z.B. Ethylendiamin, 1,3-Diaminopropan, 1,4-Diaminobutan, 1,6-Diaminohexan, 2,4-Diaminobutan und 1,6-Diamino-1,1,3-trimethylhexan mit Bisphenol-A-diglycidylether oder von aliphatischen Polyaminen, wie z.B. Diethylentriamin mit Bisphenol-A-diglycidylether.

Bevorzugt sind Addukte von primären Diaminen mit Bisphenol-A-diglycidylether.

Die Einstellung der Viskositäten von Harz- und Härterkomponente erfolgt durch Zugabe von Füllstoffen.

Als Füllstoffe eignen sich mineralische, metallische und organische Zusatzstoffe, wobei diese wegen der Herstellung der Knetmasse durch Coextrusion nicht abrasiv sein sollten, da sonst die Extruderdüsen rasch abgenützt werden.

Beispiele für solche Füllstoffe sind Kreidepulver, Kaolin, Titandioxid, Dolomit, Graphit, Russ, Glaspulver, Aluminiumpulver, Eisenpulver, Polypropylenpulver oder organische Pigmente und Farbstoffe, wobei je nach Anwendungsgebiet der Knetmasse die einen oder die andern bevorzugt werden können. Die Füllstoffe für Harz und Härter können die gleichen oder verschiedene sein.

Die gefärbten Füllstoffe erfüllen noch eine weitere Aufgabe. Da die Harz-und die Härterkomponente der Knetmasse durch Kneten vor der Anwendung gemischt werden müssen, ist die Kontrolle, ob eine genügend homogene Mischung vorhanden ist, wichtig. Deshalb werden die Härter- und die Harzkomponente verschieden gefärbt (Schwarz und weiss werden auch als Farbe verstanden). Die zur Anwendung bereite Knetmasse weist somit die Mischfarbe der beiden Farben von Harz und Härter auf.

Die Herstellung der erfindungsgemässen Knetmassen erfolgt durch Coextrusion von Harz und Härter mit der jeweilig gewünschten Viskosität. Dieses Verfahren hat den Vorteil, dass der Querschnitt der Extrusionsdüsen für Harz und Härter verschieden gross gewählt werden kann.

So ist es möglich das Verhältnis Harz- zu Härterkomponente stets so einzustellen, dass eine optimale Härtung beim Mischen erfolgt insbesondere auch dann, wenn reaktivitätsbedingt der geometrische Querschnitt von Harz- und Härterkomponente nicht 1:1 beträgt.

Daher betrifft die vorliegende Erfindung auch das Verfahren zur Herstellung der Knetmasse.

In der Regel wird die Reaktivität der Harz- und Härterkomponente aufeinander so abgestimmt, dass das Mischvolumenverhältnis 1:1 beträgt, so dass eine Ausführungsform der vorliegenden Erfindung eine Knetmasse darstellt, worin die geometrische Anordnung von Harz- und Härterkomponente im Querschnitt 1:1 beträgt.

Durch die unabhängig variable Düsenöffnung bei der Coextrusion entfällt jedoch die Notwendigkeit, die beiden Komponenten Harz und Härter auf ein Verhältnis 1:1 abzustimmen. Harz und Härter können, so wie sie nach der optimalen Füllformulierung in gewünschter Viskosität anfallen, durch geeignet gewählte Extrusionsdüsen direkt coextrudiert werden. Deshalb umfasst eine weitere Ausführungsform der vorliegenden Erfindung auch eine Knetmasse, worin die geometrische Anordnung von Harz- und Härterkomponente im Querschnitt nicht 1:1 beträgt.

Die Herstellung der Harzkomponente erfolgt durch an sich bekannte Methoden.

So wird das flüssige Epoxidharz in einem Mischer mit evtl. weiteren Epoxidharzen und dem oder den Füllstoffen gemischt. Das Mischen kann bei Raumtemperaturen oder bei erhöhter Temperatur, jedoch unter 100 °C durchgeführt werden.

Mit der Menge und der Art des oder der Füllstoffe wird die Viskosität eingestellt. Nach dem Mischprozess wird die Harzkomponente zuweckmässigerweise in den Beschickungsbehälter des Extruders überführt. Jedoch kann die Komponente auch zwischengelagert werden.

Zur Verwendung in der erfindungsgemässen Knetmasse geeignete Harzkomponenten weisen in der Regel eine Viskosität ausgedrückt als Penetrationstiefe gemäss der nachstehend beschriebenen Bestimmungsmethode von 50-180 [1/10 mm], bevorzugt von 60-150 [1/10 mm], auf.

Die Herstellung der Härterkomponente erfolgt in analoger Weise.

So wird die flüssige oder pastöse Aminkomponente (Diamin oder Diamin-Epoxid-Addukt) in einem Mischer eingebracht und nacheinander der oder die Füllstoffe unter Rühren zugegeben. Nach jeder Zugabe wird zweckmässigerweise die gute Durchmischung abgewartet bevor weiteres Material zugegeben wird.

Die Menge und die Art des oder der Füllstoffe richtet sich nach der gewünschten Viskosität. Nach dem Mischen wird die Härterkomponente direkt oder über eine Zwischenlagerung in den Beschickungsbehälter des Extruders übergeführt.

Zur Verwendung in der erfindungsgemässen Knetmasse geeignete Härterkomponenten weisen in der Regel eine Viskosität ausgedrückt als Penetrationstiefe gemäss der nachstehend beschriebenen Bestimmungsmethode von 60-170 [1/10 mm], bevorzugt von 75-140 [1/10 mm], auf.

Die Herstellung des Amin-Epoxid Addukts erfolgt nach allgemein bekannten Methoden, wie sie z B. im "Handbook of Epoxy Resins", von Lee & Neville, McGraw-Hill Verlag, New York 1982, Kapitel 7 beschrieben sind.

Die Viskositäten lassen sich für den gewünschten Bereich wahlweise durch Verwendung von höher viskosen Harzen resp. Aminen oder Aminaddukten und weniger Füllstoff oder durch niedrigviskose Harze resp. Amine oder Aminaddukte und mehr Füllstoff einstellen.

Die Viskosität der Harz- und Härterkomponenten wird als Härte der Komponente mittels eines Kitt-Penetrationstests wie folgt bestimmt. ASTM D 217 (Test method for Cone Penetration of Lubricating Grease)

## Messapparat

Das Penetrometer (IP-50 Penetrometer) besteht im Prinzip aus einem vertikalen Stativ mit einer Bodenplatte zur Probenaufnahme, die horizontal ausbalanciert werden kann, sowie einem am Stativ besfestigten auf und ab verschiebbaren Arm, woran in einer Führung ein beweglicher, arretierbarer Stab mit einem Gewicht am Stab und einem Konus am unteren Ende vertikal angebracht ist. Die Arretierung kann durch Drücken auf einen Knopf an der Führung gelöst und wieder festgemacht werden. Wird die Arretierung gelöst, gleitet der Stab in der Führung nach unten, und der Konus drückt mit dem Gewicht auf

die Probenoberfläche. Weiter befindet sich am gleichen Stativarm über dem Stab mit dem Konus ein ebenfalls beweglicher Nachführstift, der mit einer runden Skala so verbunden ist, dass die Strecke, die der Nachführstift nach unten bewegt wird mittels eines Zeigers auf der Skala angezeigt und dort in 1/10 mm abgelesen werden kann.

Messmethode

Es wird ein 50 g Klumpen der Knetmassenkomponente (Harz oder Härter) genommen und dessen Temperatur auf 25° C eingestellt, dadurch dass man den Klumpen in einen Polyethylensack gibt und diesen während 1 Stunde in ein thermostatisiertes Wasserbad bringt.
Darauf wird der Klumpen herausgenommen, ausgepackt und ohne viel Kneterei zu einem Würfel geformt. Der Würfel wird auf die Bodenplatte des Penetrometers gebracht. Die Seiten dem Würfels werden leicht zusammengepresst, damit die Probe formstabil bleibt (Wird dies nicht gemacht, so führt die Unterlassung zum Verziehen der Probe und zur Penetration). Nun wird der Konus-Stab auf die Probenoberfläche heruntergelassen, so dass die Konusspitze die Probenoberfläche gerade berührt. Dann wird der Nachführstift durch Drehen des Zeigers an der Skalenscheibe nach unten gebracht, so dass der Stift den Konus-Stab am obern Ende berührt, worauf der Zeiger auf der Skala bis zum Nullpunkt weiter gedreht wird. Dann wird auf den Halteknopf an der Führung des Konus-Stabes gedrückt und gleichzeitig mit der Stoppuhr die Zeit gemessen, während der der Halteknopf gedrückt wird. Am Ende der Zeitspanne wird der Stab durch Loslassen des Knopfes wieder arretiert. In der Zwischenzeit ist der Konus durch den Druck des Gewichts in die Knetmassenkomponentenoberfläche eingedrungen. Die Eindringtiefe wird dadurch gemessen, dass der Zeiger auf der Skala im Uhrzeigersinn gedreht wird bis der Nachführstift den Konus-Stab wieder berührt. Die Eindringtiefe wird auf der Skala in 1/10 mm direkt angegeben.
Die Eindringtiefe wird auf allen sechs seiten des Würfels gemessen.

| | |
|---|---|
| Penetrationsgewicht | : 200 g |
| Penetrationszeit | : 10 Sekunden |
| Penetrationstiefe | : Angabe in 1/10 mm |

Die erfindungsgemässe Knetmasse eignet sich sehr gut zum Einsatz als Kleber, als Füllmasse, als Modelliermasse oder als Dichtmasse. Daher betrifft die vorliegende Erfindung auch die Verwendung der Knetmasse als Kleber, als Füllmasse, als Modelliermasse oder als Dichtmasse.

Beispiel 1: Harzkomponente

30,0 Gew.-Teile eines flüssigen Epoxidharzes auf Bisphenol-A-Basis mit einem EP-Wert von 3,6-4,5, wobei das Harz zur besseren Handhabung auf 70-80° C erwärmt werden kann, werden in einem Sigma-Kneter eingefüllt. Dazu werden 2,7 Gew.-Teile eines Titandioxidpigments in einem Epoxidharz auf Bisphenol-A-Basis mit einem EP-Wert von ca. 5,3 zugegeben und das Gemisch während 10 Minuten bei Raumtemperatur mit 30 Upm (Umdrehungen pro Minute) gemischt. Danach werden unter Mischen als Füllstoffe in je zwei Zugaben je 33,65 Gewichtsteile Calciumcarbonat ($CaCO_3$-450, nicht ausgefällt) sowie Kaolin zugefügt. Die Mischung wird nach Beendigung der Füllstoffzugabe während 30 Minuten bei Raumtemperatur mit 30 Upm gemischt, um so eine homogene Mischung zu erhalten, die anschliessend dem Kneter als weisse hochviskose Masse entnommen wird.

Beispiel 2: Amin-Epoxid Addukt

26,25 Gew.-Teile Trimethylhexandiamin (TMD) und 26,25 Gew.-Teile Benzylalkohol werden in einem emailausgekleideten Rührkessel eingefüllt, auf 60° C aufgeheizt und stark gerührt. Dann werden unter Rühren portionenweise über ca. 1 Stunde 35,0 Gew.-Teile eines flüssigen Epoxidharzes auf Bisphenol-A-Basis mit einem EP-Wert von 5,0-5,2 (das auf 40-60° C zur besseren Handhabung erwärmt ist) zugegeben und darauf geachtet, dass während der Zugabe die Temperatur nie über 100° C steigt. Wenn die Harzzugabe beendet ist wird das Reaktionsgemisch bei 80° C während 15 Minuten gerührt. Darauf werden 12,5 Gew.-Teile technisches Tris-(dimethylaminomethyl)-phenol zugefügt und weitergerührt bis die Masse

homogen ist. Darauf wird die Masse abgekühlt und aus dem Reaktionsgefäss genommen.

Beispiel 3: Härterkomponente

27,68 Gew.-Teile des Addukts aus Beispiel 2, 0,01 Gew.-Teile Russ und 0,27 Gew.-Teile Titandioxid ($TiO_2$-R) werden in einem Sigma-Kneter gebracht und während 10 Minuten bei Raumtemperatur mit 30 Upm gemischt. Darauf werden über 20 Minuten portionenweise (je 2 Zugaben) 13,68 Gew.-Teile Talk (Talk # 325) und Kaolin unter Mischen zugefügt. Nach Beendigung der Füllstoffzugabe wird das Reaktionsgemisch bei Raumtemperatur und 30 Upm bis zur homogenen Mischung gemischt, was ungefähr 30 Minuten dauert. Die so erhaltene graue hochviskose Masse wird anschliessend aus dem Kneter genommen.

Beispiel 4:

100 Gew.-Teile der Harzkomponente gemäss Beispiel 1 werden in den einen Beschickungsbehälter eines Schneckencoextruders eingefüllt und 100 Gew.-Teile der Härterkomponente gemäss Beispiel 3 werden in den andern Beschickungsbehälter des gleichen Schneckencoextruders eingefüllt. Die Coextrusion erfolgt bei Raumtemperatur. Die Extrusionsdüsenquerschnitte für die einzelnen Komponenten sind gleich gross und betragen ca. 1 $cm^2$. Die beiden Extrusionsdüsen für die einzelnen Komponenten münden in eine Düse, die den Zweck hat, die beiden Komponenten Harz und Härter während der Zeit bis zur Initiierung der Härtung an den gemeinsamen Berührungsflächen zusammen zu halten. Nach Austritt aus dieser Düse wird die fertige Knetmasse erhalten.

## Ansprüche

1. Lagerstabile Knetmasse auf Epoxidharzbasis, dadurch gekennzeichnet, dass die Harz- und die Härterkomponente eine genügend hohe Viskosität besitzen, damit sie geometrisch so angeordnet werden können, dass sie eine gemeinsame Berührungsfläche besitzen.

2. Knetmasse gemäss Anspruch 1, worin das Epoxidharz ein Epoxidharz vom O-Typ ist.

3. Knetmasse gemäss Anspruch 2, worin das Epoxidharz ein Epoxidharz auf Bisphenol-A- oder Bisphenol-F-Basis darstellt.

4. Knetmasse gemäss Anspruch 1, worin die Härterkomponente einen Aminhärter darstellt.

5. Knetmasse gemäss Anspruch 4, worin der Aminhärter ein primäres Diamin ist.

6. Knetmasse gemäss Anspruch 4, worin der Aminhärter ein aminfunktionelles Addukt bedeutet.

7. Knetmasse gemäss Anspruch 6, worin das aminfunktionelle Addukt ein Addukt aus einem primären Diamin mit einem Diepoxid darstellt.

8. Knetmasse gemäss Anspruch 7, worin das Diepoxid Bisphenol-A-diglycidylether ist.

9. Knetmasse gemäss Anspruch 1, worin die hohe Viskosität durch Zugabe von Füllstoffen erreicht wird.

10. Knetmasse gemäss Anspruch 1, worin die geometrische Anordnung von Harz- zu Härterkomponente im Querschnitt 1:1 beträgt.

11. Knetmasse gemäss Anspruch 1, worin die geometrische Anordnung von Harz- zu Härterkomponente im Querschnitt nicht 1:1 beträgt.

12. Knetmasse gemäss Anspruch 1, worin die Viskosität der Harzkomponente 50-180 [1/10 mm] gemäss ASTM D 217 beträgt.

13. Knetmasse gemäss Anspruch 1, worin die Viskosität der Härterkomponente 60-170 [1/10 mm] gemäss ASTM D 217 beträgt.

14. Knetmasse gemäss Anspruch 1, worin die gemeinsame Berührungsfläche von Harz- und Härterkomponente durch Coextrusion der beiden Komponenten erreicht wird.

15. Verwendung der Knetmasse nach Anspruch 1 als Kleber, als Füllmasse, als Modelliermasse oder als Dichtmasse.

16. Verfahren zur Herstellung der Knetmasse nach Anspruch 1, dadurch gekennzeichnet, dass die Harz- und die Härterkomponente coextrudiert werden.